# EUROPEAN PATENT SPECIFICATION

(11) **EP 1 219 178 B1**
(45) Date of publication and mention of the grant of the patent: **12.07.2006**
(21) Application number: 01610130.5
(22) Date of filing: 20.12.2001
(51) Int. Cl.: A23K 1/16, A23K 1/18

(54) **Use of quillaja powder**
Verwendung von Quillaja-Pulver
Utilisation de la poudre de quillaja

(30) Priority: 27.12.2000 DK 200001937
(43) Date of publication of application: 03.07.2002
(73) Proprietor: NOR-FEED A/S, 2650 Hvidovre (DK)
(72) Inventor: Elgaard, Troels, 2660 Brondby Strand (DK); Rasmussen, Anette Bjornhauge, 2690 Karslunde (DK)
(74) Representative: Zeuthen-Aagaard, Henrik

(56) References cited:
- EP-A- 0 268 575
- EP-A- 0 435 671
- EP-A- 0 503 959
- EP-A- 1 129 627
- P.R. CHEEKE: "Proceedings of the Phytochemical Society of Europe: Saponins in food, feedstuffs and medicinal plants." 2000 , KLUWER ACADEMIC PUBLISHERS , DORDRECHT, NL XP001068265 Chapter 25, pages 241-254 * page 243, last line, last paragraph - page 244, paragraph 3 * * page 250, paragraph 3 *
- H.P.S. MAKKAR: "Effects of fractions containing saponins from Yucca schidigera, Quillaja saponaria, and Acacia auriculoformis on rumen fermentation" JOURNAL OF AGRICULTURAL AND FOOD CHEMISTRY., vol. 46, no. 10, 1988, pages 4324-4328, XP002195360 AMERICAN CHEMICAL SOCIETY. WASHINGTON., US ISSN: 0021-8561
- H.P.S. MAKKAR ET AL.: "Are quillaja saponins antinutritive to ruminants?" AMERICAN CHEMICAL SOCIETY. ABSTRACTS OF PAPER. AT THE NATIONAL MEETING., vol. 210, no. 1-2, 1995, page AGFD 186 XP001064868 AMERICAN CHEMICAL SOCIETY, WASHINGTON, DC, US ISSN: 0065-7727

## Description

### Technical Field

The invention relates to the use of quillaja powder for the production of an oral composition for milk-producing farm animals so as to ensure a normal level of the somatic cell count in the milk

### Technical Background

Oleszek et al. (eds.): Saponins in Foods, Feedstuffs and Medicinal Plants, page 241-254: Cheeke, P.R.: Actual and potential applications of Yucca schidigera and saponins in human and animal nutrition) discloses Quillaja saponaria saponins with effects on nitrogen metabolism, odour control, rumen fermentation, protozoal diseases, nutrient absorption and immune function.

J. Agric. Food Chem. 1998, 46 4324-4328) deals with the effect of among others Quillaja saponaria on rumen fermentation (in vitro). It is mentioned that saponins decrease the ammonia level and have effect on microbial growth. Furthermore measuring of gas production from the fermentation in the rumen, microbial protein synthesis, protozoal counts from the rumen fluid (in vitro)i reported.

Makkar & Becker :Abstract of Am. Chem. Soc. 1995, Vol. 210, no. 1-2), deals with effect of quillaja on gas production in the rumen and digestibility.

EP-A- 0 503 959 discloses a feed additive for livestock, poultry and fish comprising bile powder and a bacteria powder containing peptidoglycan for increasing resistance against infectious diseases including pseudorabies. Optionally the additive may also comprise at least one of licorice, licorice extract, garlic powder and quillaja extract. The disclosure is especially aimed at pseudorabbies caused by Aujeszky's virus. In the given examples parameters were examined concerning the effect on diarrhoea, weight gain, survival rate and extent of pseudorabbies in pigs, fect on reproduction of pigs, effect on immunoglobulin in chicken and lysozyme activity as an index of disease resistance.

EP 0 435 671 A1 discloses a disease resistance ration and feed additive for cattle and swine containing bile powder and at least one of licorice, licorice extract, garlic powder and quillaja extract. The primary effects are antivirus and bacteriostatic fects of a bile powder prepared from cattle and swine biles. A similar effect is stated for a feed additive containing 50 % of bile powder, 25 % of garlic powder and 1 % of quillaja extract.

EP 0 268 575 discloses a product containing among others triterpene saponins and a enzymes that improves the availability of nutrients.

EP 1 129 627 A1 discloses a natural feed additive comprising a combination of (1) an oligosaccharide, (2) a first active component containing saponin based on material from the plants Yucca, Quillaja, Azadirachta and/or Trigonellan, and (3) a second active component containing an antibacterially active substance based on material from the plants Citrus, hips, grapes, green pepper and plants of the family Lamiaceae. According to the feeding experiments the feed additive is a usable alternative to conventional growth-promoters to piglets with respect to weight gain an food utilisation.

The price for the milk delivered by each farmer to the dairy is not calculated on the amount delivered alone. Thus, the price is adjusted on the basis of the milk quality in many countries.

A vital quality factor is the fatty content of the milk, and the standard of cow milk is set at 4% by weight of fat, where a fatty content exceeding said 4% by weight results in a correspondingly increased price.

Another vital quality factor is the somatic cell count (SCC). Somatic cells are body cells from tissue, organs etc. deriving from the milker. Somatic cells are usually present in the milk at a low level, such as below 200,000 per ml, but can be even lower, such as below 100,000 per ml in animals yielding milk for the first time or in exceptionally well-managed herds.

The price of the milk at the dairy depends on SCC. When SCC is below 300,000 per ml, an extra payment of 0.03 DKK per litre is paid (price level in November 2000). When SCC is between 400,000 and 750,000, the price is deduced by DKK 0.03 per litre, and when the SCC exceeds 750,000, the price is deduced by DKK 0.06 per litre. In addition, when SCC exceeds 400,000 per ml over a period of three months, the milk producer is not allowed to deliver milk to the dairy. Furthermore, high somatic cell counts have an effect on the milk yield of the cows. According to a rule-of-thumb the milk yield of a cow drops by 10% at a cell count of 500,000 and by 25% at 1.000,000.

Reference is made to detailed data concerning the importance of SCC for the quality of the milk, said data being published by Duane N. Rice and Gerald R. Bodman i "The Somatic Cell Count and Milk Quality"; File G1151 under DAIRY, C-19, Herd Management, June 1993; the University of Nebraska-Lincoln Cooperative Extension Division, electronic version: http://www.ianr.unl.edu/pubs/dairy/g1151.htm.

High cell counts in the milk indicate an abnormal and reduced milk quality which can be caused by various factors, such as changes in the animal feed, climatic and seasonal strains as well as a reduced health and stress of each animal or the entire herd. Typically, an increased cell count indicates infections, especially bacterial infections in the udder tissue, viz. mastitis. Often it is possible to detect the beginning of an infection on the basis of increasing cell counts at an early stage where the animal does not yet present visible symptoms.

When the cows suffer from mastitis or other udder infections, they are milked off, viz. they are removed from the herd and milked separately. The unusable milk means, of course, a loss of money to the farmer, but the unusable milk is, however, often fed to the calves. However, the most important factor here is that it involves an extreme amount of work and time to milk off cows, because the time involved in the milking is considerably prolonged in the situation where a considerable number of the cows suffer from mastitis or other udder infections and cannot therefore be part of the production.

Mastitis and other infectious diseases in milk-producing farm animals are difficult to combat. Conventional bacteria control requires a visit by the veterinary and is treated by means of antibiotics. Such a visit by the veterinary is per se very expensive for the farmer. In addition, such a visit can have the effect that for a predetermined period of time following the treatment the milk can contain residues of antibiotics and is therefore unfit for human consumption. Preventive treatment with antibiotics is, of course, not acceptable either because a widespread prophylactic use of antibiotics is encumbered with problems. Thus, pathogenic micro-organisms can develop a resistance to the antibiotics in question which accordingly become less effective. Furthermore, a risk applies of antibiotic residues remaining in the milk with the result that human beings also consume antibiotics, which in turn may have the result that micro-organisms infecting human beings with diseases can develop a resistance. A continued use of antibiotics may increase the risk of an epidemic among animals and/or human beings which cannot be combated by means of antibiotics.

An increased somatic cell count indicates the presence of mastitis and other conditions in milk-producing farm animals, and hence a general deterioration of the health condition and the flourishing of the animal in question or the herd in question. The farmer is, of course, interested in a healthy and flourishing herd from both a financial and an ethical point of view. Accordingly, a demand for alternative compositions exists, said alternative compositions being capable of preventing or reducing these infections and diseases in farm animals while not being encumbered with the risk of the classic antibiotics of developing a resistance in the micro-organisms. Such compositions should, of course, be based on natural active substances because the use of synthetic chemicals in the food production is unlikely to be accepted by the farmer, the Authorities or the consumer.

In addition, the costs involved in the use of such compositions as a daily supplement to the animal feed should be in line with a reasonable business economics.

It turned out surprisingly, that a daily supplement of an inexpensive, purely natural product to milk-producing farm animals can ensure a stable, health-related quality of the milk presenting a normal, relatively low level of the somatic cell count because the health state of the herd can be maintained at a high level.

### Brief Description of the Invention

Thus the invention relates to the use of quillaja powder or the production of an oral composition for milk-producing farm animals as defined in claim 1.

The oral composition containing quillaja powder proved by way of tests on cows to improve both the health condition of the milk-yielding farm animals and the quality of the milk manifested by a reduction of 25 to 35% or more of the somatic cell count in connection with a daily supplement of quillaja powder of approximately 7 to 20 mg/kg of body weight, calculated as a dried and ground powder of bark and twigs of Quillaja saponaria with a dry-matter content of 93% by weight. From a financial point of view, the oral composition according to the invention is an extremely inexpensive supplement of quillaja powder in the magnitude of DKK 0.28 to 0.80 per cow per day, price level November 2000.

The extent of applicability of the invention appears from the following detailed description. It should, however, be understood that the detailed description and the specific examples are merely included to illustrate the preferred embodiments, and that various alterations and modifications within the scope of protection will be obvious to persons skilled in the art on the basis of the detailed description.

### Detailed Description of the Invention

Quillaja powder is extracted from the bark (cortex) of the Quillaja saponaria from Chile, Peru and Bolivia. Quillaja saponaria belongs to the rose family.The Quillaja bark comprises various active substances, including quillaic acid (quillaja sapogenin), quillaja saponin, saccharose and tannin. Quillaja saponin is built from quillaic acid and a sugar and possibly other substances. The total content of saponin in quillaja bark is according to literature approximately 9 to 10% by weight, cf. for instance The Merck Index, 12th edition, 1996, Index Nos. 8222 (Quillaja) and 8223 (Quillaja Saponin).

Quillaja powder is available in various qualities. One quality suitable for use according to the invention is Quiponin® S Powder marketed by af Nor-Feed ApS, Hvidovre, Denmark. This product is produced from bark and thin branches and twigs having been subjected to a drying and grinding. The powder is typically dried to a moisture content of 6 to 8% by weight. The content of saponins is typically in the amount of 5 to 10% by weight, calculated on dry-matter basis.

Quillaja powder can also be produced by way of an aqueous extraction of chipped bark and twigs, where the quillaja bark chips are soaked in water for for instance 24 hours, whereafter the aqueous extract is evaporated to 50% by weight of dry matter, admixed maltodextrine and spray dried.

The used amount of quillaja powder is typically 1.5 to 40 mg per kg of body weight per day, preferably 2 to 30, particularly preferred 3 to 20 and especially 4 to 10 mg per kg og body weight per day.

When nothing else is indicated, the present description and claims use the term "quilaja powder", said term refers to a reference product which is a dried and ground product extracted from bark and twigs and with a dry-matter content of 93% by weight. Being a natural product, the content of active compounds can vary in response to the growth conditions and the method used for harvesting the bark material. As far as the extracted products are concerned, the content of active substances depends furthermore on the production conditions. For a comparison of various types and qualities of the quillaja powder, the content of saponins is determined so as to be used as a marker for the content of active substances. Thus, the above reference product is defined as such a quillaja powder for practical reasons, said powder containing 7.5% by weight of saponins based on the dry-matter content.

The Quillaja powder can be administered in form of a daily supplement to milk-producing farm animals in any practical way. Thus, the quillaja powder can form part of a conventional mineral mixture which can be part of a food component, such as in a conventional feed concentrate, or it can be part in form of a component of the total animal feed, such as in form of pellets.

Quillaja powder is available in concentrated form, but is also available in form of a less concentrated premix. Such a premix is suitable for the supplier of the animal feed as he can mix the premix with the ready-made animal feed. In addition, it is also suited for the farmer because he can mix the premix with the food concentrate.

Below, two examples of premixes are found, said examples being suited for cows:
Premix 1:

| | |
|---|---|
| Quiponin® S Powder | 50 g |
| Clay mineral | 900 g |
| Anti-dust agent | 50 g |

Premix 2:

| | |
|---|---|
| Quiponin® S Powder | 160 g |
| Clay mineral | 790 g |
| Anti-dust agent | 50 g |

### Feeding experiment 1

A feeding experiment has been performed on a herd of 130 cows of the breed RDM in Odsherred, Denmark. The milch cows are held in a cattle yard allowing an occasional, free access to a pasture during the spring, summer and most of the autumn.

The cows are fed twice a day with a complete diet mix. The mixed milk from the herd is delivered daily to the dairy. Once a week, a milk sample is removed for analyses of the milk quality.

During the test period, a quillaja powder-containing premix (Quiponin® S Premix, delivered by Nor-Feed ApS, Hvidovre, Denmark) is added to the complete diet mix in an amount corresponding to 4 g of quillaja powder per cow per day. The cows present an average weight of approximately 550 kg. Thus the added amount of Quiponin® S Premix corresponds to an amount of quillaja powder of 7.3 mg/kg of body weight/day.

The results appear from Table 1.

**Table 1**

| Feeding experiments on RDM cows | | |
|---|---|---|
| 4 g of Quiponin® S Powder per cow per day. | | |
| Time | Number of somatic cells per ml | Fat in milk % by weight |
| 3/9 (4 weeks earlier) | 420,000 | |
| 12/9 (3 weeks earlier) | 380,000 | |
| 20/9 (2 weeks earlier) | 350,000 | |
| 28/9 (1 week earlier) | 250,000 | |
| 6/10 Experiment starts | 328,000 | 3.96 |
| 13/10 1 week after | not measured | 4.30 |
| 20/10 2 weeks after | 250,000 | 4.30 |
| 27/10 3 weeks after | 230,000 | 4.10 |
| 31/10 3½ week after | 250,000 | 4.05 |
| 3/11 4 weeks after | 280,000 | 4.20 |
| 7/11 4½ week after | 260,000 | 4.25 |

Mid-October fresh beet pulp was introduced into the diet concentrate, which usually causes a drop in the fat percentage. As illustrated in Table 1, a drop in the fat percentage was also observed on 27 October (27/10), but the level was still above the control value of 3.96% and rose again on 3 November (3/11). During the period 3 September (3/9) to 6 October (6/10), the cell count averaged 345,600, dropped to 254,000 during the period 20 October (20/10) to 7 November (7/11), which corresponds to a drop of 26.5%.

### Feeding experiment 2

The present experiment was performed in Switzerland, where a herd of milch cows of the race Red Holstein was divided into a test group and a control group. The cows were fed before and during the test with conventional animal feed with a composition varying in response to the season. At any time the control group and the test group were fed with the same animal feed apart from the fact that during the test period the daily animal feed of the test group was supplemented with 10 g of quillaja powder per cow corresponding to 18 to 20 mg per kg per day. The test period lasted 24 weeks. The analysis results of the milk registered every 4 week for the test group and the control group, respectively, appears from Tables 2 and 3.

**Table 2**

| Test group | | | |
|---|---|---|---|
| 10 g of Quiponin® S Powder per cow per day. | | | |
| Date (2000) | Number of cows | Milk yield litre per cow | Number of somatic cells per ml (x 1000) |
| 10/3 | 23 | 25.39 | 114.52 |
| 17/4 | 23 | 28.32 | 138.52 |
| 19/5 | 22 | 25.52 | 81.32 |
| 21/6 | 22 | 24.71 | 89.95 |
| 28/7 | 21 | 22.74 | 148.38 |
| Average | 22.2 | 25.39 | 114.45 |

**Table 3**

| Control group | | | |
|---|---|---|---|
| Same animal feed as the test group, but without the Quiponin® S Powder | | | |
| Date (2000) | Number of cows | Milk yield litre per cow | Number of somatic cells per ml (x 1000) |
| 10/3 | 19 | 25.19 | 160.58 |
| 17/4 | 16 | 24.68 | 156.5 |
| 19/5 | 15 | 24.22 | 128.4 |
| 21/6 | 16 | 25.73 | 147.38 |
| 28/7 | 13 | 23.5 | 227.46 |
| Average | 15.8 | 24.73 | 161.97 |

It appears that the milk yield for the test group has been increased by 0.66 1 per cow or 2.67%, whereas the cell count on average dropped by 47,520 per ml or 29.33% relative to the control group.

### Feeding experiment 3

The present experiment was performed in Switzerland, where a herd of milch cows of the race Red Holstein was divided into a test group and a control group. The cows were fed before and during the test with conventional animal feed with a composition varying in response to the season. At any time the control group and the test group were fed with the same animal feed apart from the fact that during the test period from 1 September to 6 September the daily animal feed of the test group had been admixed 5 g of quillaja powder per cow and during the following period 7.5 g of quillaja powder per cow. The latter corresponds to 9 to 10 and 13 to 15, respectively, mg/kg/day. The analysis results of the milk registered before and during the experiment for the test group and the control group, respectively, appear from Table 4 and 5.

**Table 4**

| Test group | | | |
|---|---|---|---|
| 5 to 7.5 g of Quiponin® S Powder per cow per day | | | |
| Date (2000) | Number of cows | Milk yield litre per cow | Number of somatic cells per ml (x 1000) |
| Before the test period | | | |
| 28 July | 12 | 29.4 | 142.4 |
| 1 Sep | 12 | 26.8 | 232.7 |
| Average | **12** | **28.1** | **187.55** |

| Test period | | | |
|---|---|---|---|
| 6 Oct | 13 | 27.4 | 100.6 |
| 10 Nov | 11 | 28.8 | 64.1 |
| Average | **12** | **28.1** | **82.35** |

**Table 5**

| Control group | | | |
|---|---|---|---|
| Same animal feed as the test group, but without the Quiponin® S Powder | | | |
| Date (2000) | Number of cows | Milk yield litre per cow | Number of somatic cells per ml (x 1000) |
| Before the test period | | | |
| 28 July | 11 | 30.5 | 124.7 |
| 1 Sep | 11 | 27.2 | 196.2 |
| Average | **11** | **28.85** | **160.45** |

| Test period | | | |
|---|---|---|---|
| 6 Oct | 11 | 30.6 | 137.3 |
| 10 Nov | 13 | 31.9 | 236.3 |
| Average | **12** | **31.25** | **186.8** |

The indicated averages are for the period before the test, viz. 28 July and 1 September, and for the test period per see, viz. 6 October and 10 November. It appears that the cell count for the test group dropped from 187,550 per ml during the period before the supplement of the quillaja powder to an average of 82,350 per ml corresponding to a drop of 46.4%, and that the cell count at the last measuring on 10 November had dropped to 64,100 corresponding to a drop of 65.8%. These results are even more interesting when the seasonal increase in the cell count at the transition from summer to autumn is considered as well. Thus, the cell count of the control group rose from 160,450 per ml during the initial period to an average of 186,800 per ml during the test period, which corresponds to an increase of 16.4% and the cell count had risen to as much as 236,300 or 47.3% at the final measuring on 10 November.

### Total evaluation of the feeding experiments

It appears from the feeding experiments performed that it is possible to ensure a low somatic cell count, which indicates a general improvement of the health of herds of milch cows. The low cell counts indicate in particular a considerable reduction of the presence of clinically detectable mastitis as well as sub-clinical mastitis. It is a well-known fact that mastitis reduces the percentage content of fat and proteins in the milk. Therefore, it is to be expected that a daily consumption of the composition according to the invention also increases the percentage of fat and proteins in the milk.

Correspondingly, it is to be expected that it is possible to obtain an improved composition of the protein content in the milk with an increased quantity of casein relative to other proteins, especially whey proteins. As a result, the milk quality is improved, inter alia the curdling capacity (cheese making properties) and the taste of the milk.

The above description of the invention reveals that it is obvious that it can be varied in many ways. Such variations are not to be considered a deviation from the scope of the invention, and all such modifications which are obvious to persons skilled in the art are also to be considered comprised by the scope of the succeeding claims.

## Claims

1. The use of quillaja powder for the manufacture of an oral composition for milk-producing farm animals for the treament of mastitis or other conditions in order to ensure a normal level of the somatic cell count in the milk.

2. The use as claimed in claim 1, **characterised in that** the oral composition is prepared in a dose form which calculated for a daily consumption contains a measured amount of quillaja powder of 1.5 to 40 mg/kg of body weight, calculated as a dried and ground powder of bark and twigs of Quillaja saponaria with a dry-matter content of 93% by weight.

3. The use as claimed in any of the preceding claims, **characterised in that** the quillaja powder is dried and ground bark and twigs of Quillaja saponaria.

4. The use as claimed in any of the claims 1 to 2, **characterised in that** the quillaja powder is obtained by evaporation and drying of an aqueous extract of ground bark and twigs of Quillaja saponaria.

5. The use as claimed in claim 1 for the preparation of an oral composition for milk-producing ruminants, especially for milk-producing cows.

6. The use as claimed in claim 1 for the preparation of an oral composition in form of an animal feed for milk-producing farm animals.

7. The use according to claim 6, **characterised in that** the oral composition is prepared in form of an animal feed which calculated for the daily consumption of said animal feed contains a measured amount of quillaja powder of 1.5 to 40 mg/kg of body weight, calculated as a dried and ground powder of bark and twigs of Quillaja saponaria with a dry-matter content of 93% by weight.

8. The use as claimed in claim 1, **characterised in that** the oral composition is prepared in form of a feed additive for milk-producing farm animals.

9. The use as claimed in claim 8, **characterised in that** the oral composition is prepared in form of a feed additive which calculated for a daily consumption contains a measured amount of quillaja powder of 1.5 to 40 mg/kg of body weight, calculated as a dried and ground powder of bark and twigs of Quillaja saponaria with a dry-matter content of 93% by weight.

## Patentansprüche

1. Anwendung von Quillaja Puder für die Herstellung einer oralen Zusammensetzung für Milch erzeugende Landwirtschaftstiere für die Behandlung von Mastitis oder anderen Zuständen zur Sicherung eines normalen Niveaus von somatischer Zellenanzahl in der Milch.

2. Die Anwendung nach Anspruch 1, **dadurch gekennzeichnet, dass** die orale Zusammensetzung in einer Dosis hergestellt wird, die eine für die tägliche Einnahme berechnet bemessene Menge von Quillaja Puder von 1.5 bis 40 mg/kg Körpergewicht enthält, berechnet als getrockneter und gemahlener Puder der Rinde und Zweige von Quillaja saponaria mit einem Trockenstoffinhalt von 93 Gewichtsprozent.

3. Die Anwendung nach irgendeinem der vorhergehenden Ansprüche, **dadurch gekennzeichnet, dass** der Quillaja Puder getrocknete und gemahlene Rinde und Zweige von Quillaja saponaria ist.

4. Die Anwendung nach irgendeinem der Ansprüche 1 und 2, **dadurch gekennzeichnet, dass** der Quillaja Puder durch Eindampfen und Trocknen eines wässrigen Extrakts von gemahlener Rinde und Zweigen von Quillaja saponaria gewonnen wird.

5. Die Anwendung nach Anspruch 1 für die Herstellung einer oralen Zusammensetzung für Milch erzeugende Wiederkäuer, insbesondere für Milch erzeugende Kühe.

6. Die Anwendung nach Anspruch 1 für die Herstellung einer oralen Zusammensetzung in Form eines Tierfutters für Milch erzeugende Landwirtschaftstiere.

7. Die Anwendung nach Anspruch 6, **dadurch gekennzeichnet, dass** die orale Zusammensetzung in Form eines Tierfutters hergestellt ist, das eine für die tägliche Einnahme dieses Tierfutters berechnet bemessene Menge von Quillaja Puder von 1.5 bis 40 mg/kg Körpergewicht enthält, berechnet als getrockneter und gemahlener Puder der Rinde und Zweige von Quillaja saponaria mit einem Trockenstoffinhalt von 93 Gewichtsprozent.

8. Die Anwendung nach Anspruch 1, **dadurch gekennzeichnet, dass** die orale Zusammensetzung in Form eines Futterzusatzstoffes für Milch produzierende Landwirtschaftstiere hergestellt ist.

9. Die Anwendung nach Anspruch 8, **dadurch gekennzeichnet, dass** die orale Zusammensetzung in Form eines Futterzusatzstoffes hergestellt ist, der eine für die tägliche Einnahme berechnet bemessene Menge von Quillaja Puder von 1.5 bis 40 mg/kg Körpergewicht enthält, berechnet als getrockneter und gemahlener Puder der Rinde und Zweige von Quillaja saponaria mit einem Trockenstoffinhalt von 93 Gewichtsprozent.

## Revendications

1. Utilisation de poudre de quillaja pour la fabrication d'une composition orale pour des animaux de ferme de production laitière pour le traitement de la mastite ou d'autres maladies afin de garantir un niveau normal du décompte de cellules somatiques dans le lait.

2. Utilisation selon la revendication 1, **caractérisée en ce que** la composition orale est préparée sous forme de dose qui, calculée pour une consommation journalière, contient une quantité mesurée de poudre de quillaja de 1,5 à 40 mg/kg de poids corporel, calculée en poudre séchée et broyée d'écorce et de rameaux de Quillaja saponaria ayant une teneur en matières sèches de 93% en poids.

3. Utilisation selon l'une quelconque des revendications précédentes, **caractérisée en ce que** la poudre de quillaja est de l'écorce et des rameaux séchés et broyés de Quillaja saponaria.

4. Utilisation selon l'une quelconque des revendications 1 à 2, **caractérisée en ce que** la poudre de quillaja est obtenue par évaporation et séchage d'un extrait aqueux d'écorce et de rameaux broyés de Quillaja saponaria.

5. Utilisation selon la revendication 1 pour la préparation d'une composition orale destinée à des ruminants de production laitière, notamment à des vaches de production laitière.

6. Utilisation selon la revendication 1 pour la préparation d'une composition orale sous forme d'aliment pour animaux destiné à des animaux de production laitière.

7. Utilisation selon la revendication 6, **caractérisée en ce que** la composition orale est préparée sous forme d'aliment pour animaux, lequel aliment, calculé pour la consommation journalière dudit animal, contient une quantité mesurée de poudre de quillaja de 1,5 à 40 mg/kg de poids corporel, calculée en poudre séchée et broyée d'écorce et de rameaux de Quillaja saponaria ayant une teneur en matières sèches de 93% en poids.

8. Utilisation selon la revendication 1, **caractérisée en ce que** la composition orale est préparée sous forme d'additif alimentaire pour animaux de production laitière.

9. Utilisation selon la revendication 8, **caractérisée en ce que** la composition orale est préparée sous forme d'additif alimentaire, lequel, calculé pour une consommation journalière, contient une quantité mesurée de poudre de quillaja de 1,5 à 40 mg/kg de poids corporel, calculée en poudre séchée et broyée d'écorce et de rameaux de Quillaja saponaria ayant une teneur en matières sèches de 93% en poids.
